# EUROPEAN PATENT SPECIFICATION

(11) **EP 4 107 294 B1**
(45) Date of publication and mention of the grant of the patent: **29.04.2026**
(21) Application number: 21706514.3
(22) Date of filing: 16.02.2021
(51) Int. Cl.: C21B 3/08, C22B 3/02, C22B 7/04, C22B 9/10, C22B 11/02

(54) **APPARATUS AND METMOD FOR SEPARATING A SLAG MATERIAL FROM A COLLECTOR MATERIAL**
VORRICHTUNG UND VERFAHREN ZUM ABSCHEIDEN EINES SCHLACKEMATERIALS AUS EINEM SAMMLERMATERIAL
APPAREIL ET PROCÉDÉ DE SÉPARATION D'UN MATÉRIAU DE LAITIER D'UN MATÉRIAU COLLECTEUR

(30) Priority: 19.02.2020 DK PA202000204
(43) Date of publication of application: 28.12.2022
(73) Proprietor: FLSmidth A/S, 2450 Copenhagen SV (DK)
(72) Inventor: BRUCE, Trevor, Craig, 2191 Gauteng (ZA); GLOSSOP, Charles, 0158 Gauteng (ZA); DE JONG, Terre-Blanche, Mokopane, Limpopo (ZA)
(74) Representative: Aera A/S
(86) International application number: PCT/EP2021/053704
(87) International publication number: WO 2021/165225

(56) References cited:
- EP-A1- 2 261 383
- US-B1- 6 227 379

## Description

### Field of invention

The present invention relates to an apparatus having rotatable impact members for processing a fusion mix sample and separating the fusion mix sample into a portion comprising slag material and a portion substantially comprising collector material.

### Background

The process of assaying, also known as "fire assay", is well known and widely used in the gold and platinum mining industry in order to analyse an ore sample and quantify the amount of gold and/or Platinum Group Metals (PGM's), present therein. PGMs may be platinum, palladium, rhodium, osmium, iridium and ruthenium.

The process of assaying typically involves weighing an ore sample and mixing it with a flux containing a collector material, such as lead oxide or nickel. The mixture is thereafter placed in a crucible and heated to temperatures of between 1100°C to 1300°C. Sufficient time is allowed for the mixture to melt and for the lead oxide or nickel to be reduced to lead or nickel sulphide which then collects all the gold and/or PGM's in the mixture as a result of their chemical affinity.

The mixture of molten slag and molten collector material comprising gold or PGM's, is poured into a vessel. The molten collector material settles below the molten slag as a result of a density difference between the materials. In conventional assaying methods, the total volume of mixture is first allowed to cool and solidify where after the collector material is separated from the slag for further processing using mechanical techniques (typically manual). Conventional mechanical separation is very labor intensive, hazardous and also time consuming.

Automated apparatuses have been developed over the years to avoid conventional manual mechanical separation techniques. These apparatuses are capable of handling larger volumes of ore faster and more efficiently, thus resulting in a reduction in assaying time and potential for human error and an improvement on repeatability and precision of sample preparation and analysis. One such apparatus is disclosed in United States patent number US7,473,394. This document discloses a separating vessel comprising a container defining an interior cavity for receiving the molten materials, an outlet aperture leading from the interior cavity to the exterior of the container, and a separating surface associated with the outlet aperture which is shaped to cause droplets of flux to be carried along such surface, while droplets of collector material drip off such surface under the force of gravity.

A disadvantage associated with the apparatus disclosed in United States patent number US7,473,394 is that it functions at elevated temperatures of around 1200 degrees Celsius. The reason for this is that the apparatus is reliant on both the collector material and the flux remaining in a fluid state in order to ensure the relevant viscosities remain at an appropriate value. As a result, the container is typically manufactured from ceramics in order to withstand the very high temperatures. The lifespan of these containers are very limited and often need to be replaced after only 10 uses.

Another such apparatus is disclosed in the international patent application WO 2013/183031 A1. This document discloses a container defining a cavity for receiving the molten slag and molten collector material therein. The container has an opening extending from the cavity to an exterior of the container, a control surface associated with the opening in the container to control draining of molten slag through the opening in the container and temperature regulating means for regulating the temperature of the control surface. This invention resulted in the reduction of consumables and eliminated the need for the separation at high temperatures.

A disadvantage associated with this apparatus in WO 2013/183031 is that it the success of the separation is highly dependent on the collector and slag chemical characteristics varying the viscosity of these materials. This means that it will need to be set up for one type of material. If this material type changes (which is common on this kind of analysis) the system will not sufficiently separate the collector material from the slag material.

US 6,227,379 B1 discloses an apparatus for separating solids from liquid/solid slurries. The slurry to be separated is retainably placed within a container having one or more lift paddles secured within its inner cavity. The container is supported for rotation about an axis and has drive means for slowly rotating the container.

EP 2 261 383 A1 discloses a rotating drum to process ladle slag. The material inside the drum is disintegrated by rotating the drum.

### Summary of Invention

With this background, it is therefore an object of the present invention to provide a separating system for sufficiently separating slag from a collector material for the purpose of assaying of gold and/or PGM's in an ore/process sample that will, at least partially, alleviate the above disadvantage and/or provide a useful alternative to existing separating systems.

The invention, these and further object are obtained by a process for separating a fusion mix sample comprising a slag material and a collector material using a separator comprising an impact member configured to rotate around a center axis of the separator, the process comprising at least the steps of:
providing a solid fusion mix sample and loading the solid sample into the separator;
dislodging slag material from the solid fusion mix sample by rotating the impact members and contacting the rotating impact members and the solid fusion mix sample to provide a collector material and a slag material;
separating by specific gravity using a gas flow and optionally centripetal forces on the loosened slag to provide a high-density fraction substantially comprising the collector material and a low-density fraction substantially comprising slag material.

By contacting the rotating impact member and the sample in the separator, slag material will dislodge upon impact between the rotating impact member and the slag material. Upon impact the sample will start to move and hit an inner surface of the separator. If the contact point of the sample that hits the inner surface comprise a layer of slag material, this slag material will be dislodged. If the impact member is rotated continuously the sample will be thrown around inside the separator as it contacts the rotating impact members and the inner surface of the separator. The impact members are rotated until the fusion mix sample is substantially free from slag material and only comprises the collector material.

The fusion mix sample comprises a collector material based flux, such as lead oxide or nickel sulphide and an ore comprising gold and/or PGM's. The mixture of collector material and ore is heated to a temperature of between 1100°C to 1300°C for a time sufficient to allowed for the mixture to melt and for the collector material to be reduced. The reduced collector material collects the gold and/or PGM's in the mixture. The mixture is then cooled to provide the solid fusion mix sample. The remaining material in the sample is referred to as slag material.

The impact members are arranged in the separator so that upon rotation around the center axis the impact members come into contact with any material inside the separator. The impact members may be any kind or suitable component for rotating and dislodging slag material from a fusion mix sample upon impact. This may e.g. be impellers, vanes, arms, blades, maces etc.

The impact member comprises one or more impact heads, one or more link pieces and a rotating element. The rotating element is driven by a motor and rotates around the center axis. The link piece is attached to the impact head in one end and to the rotating element in the other end.

The link piece may be a string, chain, wire, cable, line or similar, which is strong enough to withstand the tension caused by the rotating impact members. Simultaneously, the link piece should be flexible, such that it may go slack when no force acts on it. Since the link pieces are flexible, the rotating impact members are deflected by impacting a fusion mix sample. Because the impact member is deflected it do not push the fusion mix sample around the separation chamber. Instead the impact member is pulled past the fusion mix sample and because of the centripetal force acting on it the link piece is then straightened out at its end and rotates until it comes into contact with the sample again. The flexible link piece do therefore not push material around in the separation chamber and a more efficient separation is obtained. Additionally since the impact members are deflected by impacting a fusion mix sample, its paths in the separation chamber is not a uniform circular motion but may move up and down in relation to the central axis.

Alternatively the link piece may be rigid such as a metal tube or metal shaft. A rigid link piece provides a uniform circular motion of the impact elements in the separation chamber during rotation. The rigid link pieces should preferably be ramp / wedge shaped to allow a fusion mix sample to pass over it when they come into contact and to tumble the fusion mix sample. The wedge shape oriented such that the narrow end is toward the direction of rotation.

By rigid is meant that the link piece is not forced out of shape due to rotation, i.e. it do not have different shapes during a slack or tensioned state like a string. However the rigid link piece is not brittle and may still slightly flex upon impact with a fusion mix sample to avoid breaking.

Preferably the impact heads and optionally the rigid link pieces have a high density and are hardened so that they can withstand the impact with fusion mix samples. The impact members may be of a metal such as steel. It is preferred that the impact heads and optionally the rigid link pieces are blunt as this design will divide the impact of the impact members to a larger surface area of the sample and ensures that only slag material is dislodged from the fusion mix sample (and not any collector material). The impact heads preferably have a small diameter, such as around 5 mm to 40 mm and a rounded shape, to allow for point impact on all areas of the surface of the solid fusion mix sample as it tumbles around in the separator. More preferably the impact heads have diameters of around 10 mm to 25 mm. The impact members, and optionally also the link pieces, are preferably blunt so that they do not have flat/sharp edges that could potentially dislodge collector material from the primary mass of collector material whilst removing slag. It is preferred to rotate the impact members as slow as possible to minimize wearing of the parts. In order to facility this the total mass of the impact member is important due the increased impact force that can be applied to the slag at the same or slower speeds than lighter impactors. The typical weight of an impact head and the corresponding link piece is between 10 g to 75 g. The weight of the impact members can be changed depending on the size and material type of the fusion mix sample. Typically a fusion mix sample has a weight of 20 grams to 60 grams.

In a preferred embodiment of the invention the length of the link pieces are adjustable. Preferably the adjustment may be carried out during use of the separation unit. By length is meant the distance between the rotating element and the impact heads.

Dislodging simply means that slag material is loosened / detached from the collector material as the fusion mix sample is worked by the rotating impact members. The rotation of the impact members is preferably maintained to repeatedly impact the fusion mix sample until the slag material is dislodged. As the impact members come into contact with the fusion mix sample, the fusion mix sample moves around inside the separator and changes its orientation thereby exposing all areas of the fusion mix sample to the impact members.

After dislodging substantially all slag material from the fusion mix sample, the remaining material of the fusion mix sample is essentially only collector material. By the wording substantially all slag material and essentially only collector material is meant that the fusion mix sample is visually free from slag material, and that only traces/dusts remains. Preferably the fusion mix sample after the step of dislodging comprises 99 w/w% or more collector material.

As the impact members rotate, dislodged slag material is contacted and grinded into smaller pieces and particles. Another function of the rotating impact members is to force the dislodged slag particles upwards and/or towards the periphery of the separator. This is a result of the centripetal force applied to the slag material particles being forced in a circular motion around the separator. The dislodged and/or grinded slag material has a weight much lower than the collector material and specific gravity may therefore effectively be used to separate them. In one embodiment a gas flow is provided to the separator during or after rotating the impact members to remove the dislodge slag material from the separator. This gas flow is e.g. provided by separate gas inlet(s) and/or by suction means e.g. through the outlet. The gas flow may be directed in an upwards direction in the separator to remove lighter particles (slag material).

According to the present invention the impact members are rotated around the center axis, said center axis being oriented at an angle between 15 to 85 degree with respect to vertical. By vertical is meant a direction parallel with the direction of gravity. By rotating the impact members around an inclined center axis causes the fusion mix sample to move in an at least partially upwards or downwards direction upon impact with the rotating impact members. This prevents the fusion mix sample from rotating along with the impact members, but instead provides a more unpredictable and more efficient movement and rotation of the fusion mix sample.

In a preferred embodiment of the invention the step of dislodging slag material from the solid fusion mix sample is carried out for a period of 10 seconds to 60 seconds, more preferably 15 seconds to 30 seconds. Preferably the impact members are rotated with 500 RPM to 1000 RPM, such as 700 RPM. It has been found that by having a rotating impact member, slag material may efficiently be dislodged from a fusion mix sample in only 10 seconds to 60 seconds. Rotating the impact members with 500 RPM to 1000 RPM provides efficient and fast dislodging of slag material with an acceptable wear of the impact members.

The process as described above provides a separated collector material which has a purity of 99 w/w% or more, such as 99.9 w/w% or more.

In a preferred embodiment of the invention the process additionally comprises the step of:
providing a liquid fusion mix sample comprising collector material and slag material;
separating, while in the liquid state, the collector material from a portion of the slag material by removing a portion of the upper layer of the liquid fusion mix sample; and
cooling the remaining liquid fusion mix sample to provide a solid fusion mix sample.

These additional steps lead to an excess amount of slag material to be removed. The remaining liquid fusion mix sample has a reduced mass and may therefore be cooled much faster. The total time required to separate a collector material from a slag material is therefore reduced.

In a preferred embodiment of the invention the provided liquid fusion mix sample has a volume V₁ and the step of separating is achieved by pouring the liquid fusion mix sample into a container having a top opening and a volume V₂, wherein the volume V₂ is less than V₁.

The liquid fusion mix sample is comprised of the volume of collector material V_{c} and the volume of slag material Vₛ. Preferably the container has a volume V₂, wherein V₂ is larger than V_{c} but smaller than V₁.

Preferably the volume of V₂ is selected such that 30 w/w% to 50 w/w% of the slag material (Vₛ) is removed. By adding the liquid fusion mix into a container adapted to only partially contain the liquid fusion mix excess slag material having a density much lower than the collector material will overflow through the top opening. These additional steps are merely to reduce the amount of slag material and to provide a faster cooling and an overall faster process. The amount of slag material removed while in a liquid state, do not influence the purity of the separated collector material after dislodging and separation by specific gravity.

In a preferred embodiment of the invention the step of cooling the remaining liquid fusion mix sample to provide a solid fusion mix sample is carried out by forced cooling.

By the term forced cooling is understood a cold gas or liquid provided to or near the surface of the fusion mix sample. As an example, the container may have a cold liquid flowing inside a cavity in the container outer wall or around the outside of the outer wall. The liquid may be water or oil. Alternatively, the cooling takes place at ambient or cooled conditions, such as in a cooler.

According to another aspect the invention relates to an apparatus for separating a collector material from a slag material, having a separating unit, the separating unit defining a central axis, and comprising
a separating chamber having an inner surface and having a top portion and a bottom portion arranged with respect to the central axis
an inlet for entry of a solid fusion mix material,
an impact member configured to rotate around the central axis by rotating means and adapted to contact a solid fusion mix material in the separating chamber while rotating, to separate the solid fusion mix material into a slag material and a collector material; and
at least one outlet for removing of separated slag material and/or collector material from the separating chamber.

The apparatus for separating a collector material from a slag material allows for separation while the materials are in a solid state. This provides a robust separation without any loss of collector material.

The rotating means may be a drive such as an electric motor which provides a rotational motion to the impact member.

In a preferred embodiment of the invention the apparatus further comprising a casting unit comprising:
- a container for accommodating a liquid fusion mix material, the container having a base with a side wall extending therefrom, preferably extending perpendicular from the base in a first direction, the side wall defining a top opening into the container;
- cooling means for solidifying a liquid fusion mix material in the container; and
- moving means adapted to move the container between at least a loading position and an unloading position.

By having an apparatus comprising a casting unit and a separating unit for separating collector material and slag material allows for a fast and robust separation. The container may comprise a spout or chute located on the side wall at or near the top opening, adapted for spouting an excess of liquid fusion mix from the container. The spout may be a tube or lip which allows an excess of liquid fusion mix to flow from the container in a controlled manner, e.g. into an overflow bin. The container is attached to a moving means, such as a rotary actuator or a robotic arm, which allows the container to swivel, orientate, and/or move into different position. The casting unit is configured to change the orientation and position of the container e.g. a position where the container is oriented such that the top opening is facing upwards. This configuration ensures that the largest amount of liquid may be accommodated in the provides container. The container may also be oriented such that the side wall is parallel with a direction which is angled with regards to vertical. As this angle increases from 0 towards 90 the amount of liquid which can be accommodated in the container decrease. It is preferred that the container in a loading position has an angle between 0° and 90°, preferably between 30° and 60° such that it is arranged for accommodating less volume of liquid fusion mix sample than added to the container. The excess amount of liquid fusion mix sample (slag material), will overflow resulting in the same amount of collector material, but less amount of slag material in the container. The remaining liquid fusion mix sample has a reduced mass and may therefore be cooled much faster. The total time required to separate a collector material from a slag material is therefore reduced. The cooling means may be water cooling or cooling by another suitable liquid. The container may comprise a cavity in the side wall for flowing such a liquid, or a cooling unit may be located on the outside of the contained.

The container assumes the unloading position when the moving means orients the container such that the top opening is oriented in a downwards direction. Any content of the container will due to gravity fall out of the container. As aid the removal of material from the container, the container may be positioned in the unloading position by a sudden stop (mechanical stop). This provides an impact shock which may assist in releasing the fusion mix sample from the container.

The casting unit is preferably located adjacent the separating unit, such that the container in the unloading position unloads the solidified fusion mix material into the separating unit inlet. Alternatively, the apparatus may comprise a chute adapted for transporting a sample unloaded from the container into the inlet of the separating unit.

According to the present invention the central axis is oriented at an angle between 15 to 85 degree with respect to vertical. In another preferred embodiment of the invention the bottom portion of the separating chamber has a tapered shape, preferably a conical shape or half spherical shape. The inclination of the central axis and/or tapered shape provides a better dislodging of slag material from a fusion mix sample. Orienting the central axis at the described angle and rotating the impact members around this axis, causes the fusion mix sample to move in an at least partially upwards or downwards direction upon impact with the rotating impact members. The tapered shape helps to control the movement of the fusion mix sample, collector material and/or slag material during use of the separating unit, since these materials may be guided by the tapered shape of the inner surface towards the impact members and/or the outlet(s).

In a preferred embodiment of the invention the separating unit comprising a first outlet for removing slag material and a second outlet for removing collector material. In a preferred embodiment of the invention the first outlet is located in the top portion. In preferred embodiment of the invention the second outlet is located in the bottom portion. As the impact members rotate, dislodged slag material is contacted and broken into smaller pieces and particles, while collector material remains as a single piece. In a preferred embodiment of the invention the first outlet may comprise suction means configured to extract the particles and/or dusts of slag material from the separating chamber. Because the collector material is much heavier it will remain in the separating chamber as the slag material is removed through the first outlet. In a preferred embodiment of the invention the second outlet may be an opening in the separating chamber covered by a door or gate which has an inner surface which is flush with an inner surface of the separating chamber. The door or gate may be connected to the separating chamber by a hinge allowing it to rotate around the hinge to open and close the second outlet. Preferably the second outlet is located in the lower side of the separating chamber optionally in the lower side of the bottom portion of the separating chamber. When rotation of the impact members is stopped, the collector material will rest in the lowest area of the bottom portion of the separating chamber. Opening the outlet therefore removes the collector material from the separating chamber. The inlet may preferably be located in the top portion of the separating chamber.

In a preferred embodiment of the invention the impact member may be impellers, vanes, arms, blades, maces etc. Preferably the impact member is hardened and has a high density so that they can withstand the impact with fusion mix samples. The impact member may be of a metal such as steel. It is preferred that the impact member, more particularly the impact heads, are blunt as this design will divide the impact of the impact members to a larger surface area of the sample and ensures that only slag material is dislodged from the fusion mix sample (and not any collector material). Preferably a plurality of impact heads are located centrally at the bottom of the separating chamber. In a preferred embodiment of the invention the apparatus comprises 2, 3, 4, 5, or 6 impact heads configured to rotate around the central axis. Preferably the majority of the weight of the impact member is located in the impact heads. This is particularly the case when the impact heads are attached to flexible link pieces such as strings, chains, wires or cables.

In another preferred embodiment of the invention the impact members are located on the inner surface of the separating chamber and wherein the separating chamber is adapted to rotate around the center axis. In this embodiment the impact members is preferably vanes or a plurality of half spheres mounted or integrated on the inner surface of the separating chamber.

Further presently preferred embodiments and further advantages will be apparent from the following detailed description and the appended dependent claims.

### Brief description of the drawings

The invention will be described in more details below by means of non-limiting examples of presently preferred embodiments and with reference to the schematic drawings, in which:
Fig. 1 shows a schematic cross-sectional view of an apparatus for separating a collector material from a slag material comprising a separating unit and casting unit according to an embodiment of the invention;
Fig. 2 shows a schematic cross-sectional view of a separating unit during intended use according to an embodiment of the invention;
Fig. 3 shows a schematic cross-sectional view of a separating unit during unloading according to an embodiment of the invention;
Fig. 4 shows a schematic cross-sectional view of a casting unit according to an embodiment of the invention;
Fig. 5 shows a schematic cross-sectional view of a casting unit according to another embodiment of the invention.

### Detailed description of embodiments of the invention

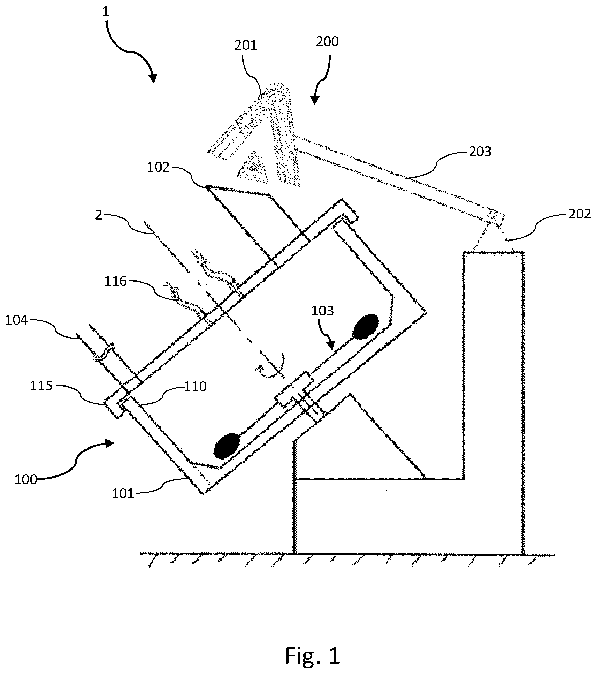

Fig. 1 shows a schematic view of an apparatus 1 for separating a collector material from a slag material. The apparatus 1 has a separating unit 100 and a casting unit 200. The separating unit 100 comprising a separation chamber 101 having an inner surface 110 and having a top portion 111 and a bottom portion 112 arranged with respect to a central axis 2. The central axis 2 is inclined at an angle of 35° with respect to vertical, but may alternatively be oriented at any angle between 15° to 85° with respect to vertical, according to the invention. A lid 115 is located on the top portion 111 of the separation chamber 101. An inlet 102 for entry of a solid fusion mix material 3 is located in the lid 115. An impact member 103 is configured to rotate around the central axis 2. It is driven by rotating means (not shown) and is adapted to contact a solid fusion mix material 3 if present in the separation chamber 101. When the impact member 103 contacts the solid fusion mix material 3 while rotating, slag material located on the surface of the solid fusion mix material 3 will be dislodged. An outlet 104 allows extraction of separated slag material from the separating chamber 101. The outlet 104 is located in the lid 115 near the periphery. The inlet 102 and outlet 104 is located in opposite sides of the lid 115. When the separating unit 100 is arranged for intended use, the lid 115 is located on the separating chamber 101 such that the outlet 104 is below the inlet 102. The lid 115 additionally comprises two air inlets 116. The air inlets 116 allows for compressed air to be purged into the separation chamber 101 for cleaning the separating unit between separation. In the shown embodiment the casting unit 200 is located adjacent the separating unit 100. The casting unit comprises a container 201 suitable for accommodating a liquid fusion mix material. The container has a base 207 with an inner and outer side wall 220 and 221 extending from the base 207. The side walls defining a top opening 240 into the container 201. The container 201 is attached to a moveable arm 203. The arm 203 is moveably attached to a base 202 to allow the container 201 to move between at least a loading position and an unloading position.

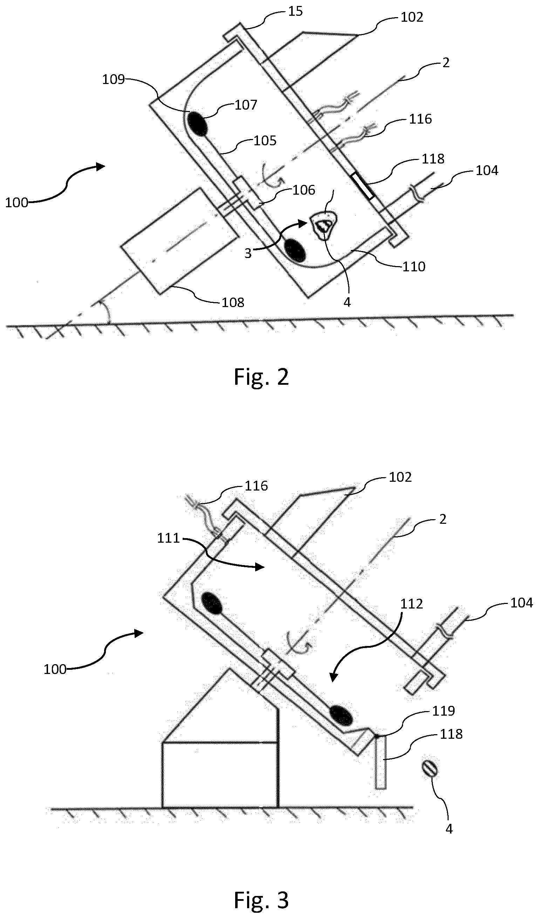

Turning now to Fig. 2 showing a separating unit 100 during intended use, wherein the separation chamber 101 accommodates a solid fusion mix sample 3. The separating unit 100 may be configured for separating different sized fusion mix samples 3 by changing the size of the components in the separating unit 100. The impact member 103 has two impact heads 107 each mounted on link pieces 105. The link pieces 105 are attached to a rotating element 106 and extends in a radial direction from the rotating element 106. Alternatively the impact member 103 may comprise 3 or 4 impact heads balanced around the center axis 2. The rotating element 106 is driven by a motor located in the base 108. The motor preferably has a variable speed drive (VSD), which allows for various rotation speeds of the impact member 103 within a single separation cycle. Variable rotational speeds provides an optimized separation process. High speeds may be applied at the start of separation but after a set time the speed may be reduced to ensure minimal wear on the rest of the system and to further reduce risk of any collector material from being dislodged once most of the slag material covering it is removed. The speed can then be increased again just before release of the collector material to ensure all slag is forced out the chute outlet 104. The link pieces 105 are made from high wearing steel to withstand contact with material in the separation chamber 101. The link pieces 105 may further be configured to swivel on itself upon impact with solid fusion mix samples 3. The direction of rotation may be reversed during separation. This may be beneficial if material is stuck somewhere in the separation chamber 101. In combination with a variation of the speed of the rotation this provides improved separation. The length of the link piece 105 is flexible whereby the distance between the distal end 109 of the impact heads 107 and the inner surface 110 of the separation chamber 101 can be varied. This allows the separating unit 100 to be configured to different sized samples. At its maximum length the impact heads 107 are spaced from the inner surface 110 of the separation chamber 101 by a small gap. By increasing the length of the link piece 105, the momentum of the impact heads 107 increase during rotation. When larger samples are to be separated, the length of the link piece 105 may be reduced to make the impact member 103 more robust. During a typical separation cycle, the length of the link piece 105 is reduced after initial impact between the impact heads 107 and the solid fusion mix sample 3 in order to only impact the fusion mix sample and less so to push the separated slag material around. The effect is a much more efficient separation.

As the impact member 103 rotates it come into contact with the solid fusion mix sample 3. The slag material 5 located on the surface of the solid fusion mix sample is dislodged by the contact with the impact heads 107 and eventually provide a separated collector material 4.

The size of the inlet 102 is configured to only allow samples of such a size that the impact members 103 are not unintentionally damaged during separation. The inlet 102 is located in lid 115 preferably in the upper portion of the separation chamber. This ensures that separated slag is not send back up the inlet 104. As illustrated in the Fig. 2 the outlet 104 is located closer to the periphery of the separation chamber than the inlet 102.

The height of the separation chamber 101 i.e. from the floor of the separator to the underside of the lid 115 is set to allow for enough space for the solid fusion mix sample to tumble freely.

The lid 115 is removably fastened to the separation chamber 101 by fastening means in the form of quick release clamps. This allows for easy access to the separator chamber for inspection/maintenance. Additionally the lid 115 comprises the inlet 102, outlet 104 and air inlets 116. In the embodiment shown in Fig. 2 the lid 115 additionally comprise a second outlet in the form of a door 118 for easy removal of the separated collector material. The door is controlled by an actuator (not shown) located in or on the lid 115.

The bottom of the separation chamber 101 has a tapered shape similar to a half spherical shape to guide the fusion mix sample 3 towards the impact member 103.The first outlet 104 may comprise suction means (not shown) to aid the removal of dislodged slag material from the separation chamber 101.

Turning now Fig. 3 showing a separating unit 100 during unloading. The second outlet in the form of a door 118 is located in the separation chamber wall. The door 118 is moveably connected to the separation chamber by means of a hinge 119 and controlled by an actuator (not shown). After a full separation cycle the collector material 4 is substantially free from slag material 5 and has a substantial round shape due to the repeating contacts with the impact member 103. The embodiment of the separation unit 100 has air inlets 116 located in the separation chamber wall. It may be positioned to form swirling air flow along the inner periphery of the separation chamber. Optionally the swirling air flow may be directed against or parallel with the rotational direction of the impact member 103. In the embodiment shown, the air inlet 116 is positioned substantially opposite of the first material outlet 104. The inlet 102 may comprise a sensor (not shown) to sense if a sample enters the separation unit 100. A controller (not shown), may upon receiving the sensed signal, close the inlet opening (and the outlets), and initiate separation by starting the motor driving the rotating element 106. Sensors may be located near the outlets 104 and/or 118 to measure if the outlets are in an open or closed position. Additionally the sensor near the outlet 104 may sense if dislodged slag flows through the open outlet 104. The separation may stop after a specific time or when no slag material flows though the outlet 104.

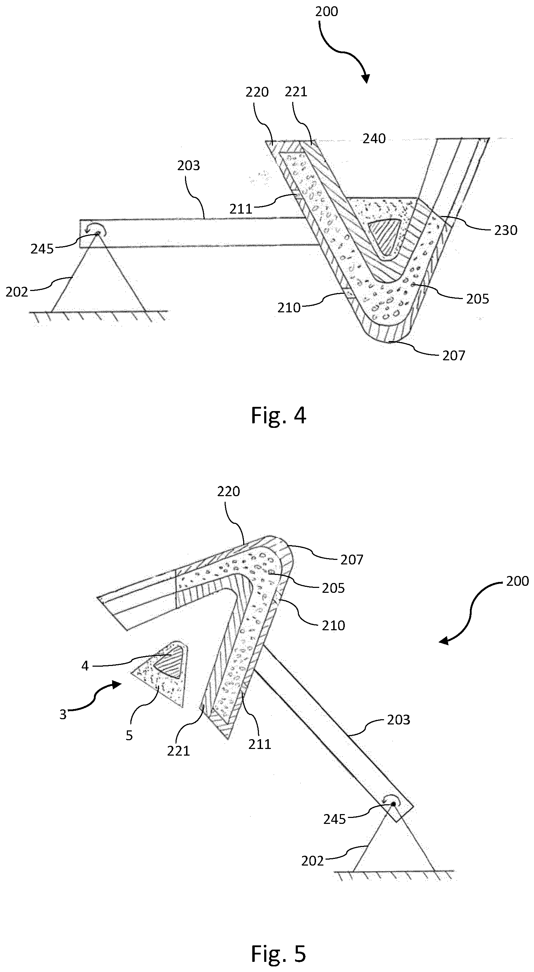

Turning now to Fig. 4 showing one embodiment of a casting unit 200. The casting unit 200 comprises container 201 defined by an inner wall 221. The container 201 which is adapted for receiving molten fusion mix to be cast into a desired shape. In the embodiment shown, the fusion mix is cast into a cone-shape. It may be any shape, such as square, cylinder, round, etc. It is preferred that there are no thin sections that can easily be dislodged from the primary mass of collector material during separation, which could then potentially be carried away with the slag fragments. The inner wall 221 together with the outer wall 220 define a cavity 205 for flowing a cooling fluid. An inlet 210 and outlet 211 allows cooled fluid to flow into and out of the cavity 205. A liquid such a water or heat transfer oil is preferred for cooling. The flow of cooling fluid is controlled by flow control valves (not shown) comprising sensors to flow or stop the supply of cooling fluid. The sensor may measure a parameter indicating the flow or temperature of the cooling fluid which can be used to optimize the forced cooling.

The container 201 has a top opening 240 for pouring molten fusion mix into the vessel. The vessel 201 is made from a material which can withstand the temperature of molten fusion mix, such as cast iron or a steal alloy. The vessel 201 has a side opening 230 in the inner wall 221 and outer wall 220. The opening 230 functions as a chute for allowing an excess amount of slag to discharge from the container 201. The collector material in the liquid fusion mix has a larger density than the slag material. The collector material will therefore settle towards to bottom of the container 201 while the excess amount of slag material will be discharged. By removing an excess amount of slag and force cooling with a cooling fluid, the fusion mix will be cast much faster and allows for an overall faster process. A moveable arm 203 is in one end connected to the outer wall 220 of the vessel 201 and in the opposite end moveably connected to a base 202. The container 201 may therefore move in relation to the base 202. In the shown embodiment the base 202 has a rotatable pin 245 which is fixed to a hole in the moveable arm 203. The pin is coupled to a motor in the base 202 (not shown) allowing it to rotate. By rotating the pin, the vessel 201 may be moved from a loading position shown in Fig. 4 to an unloading position shown in Fig. 5. In Fig. 5 the vessel 201 is rotated around the base 202 such that the opening 240 is oriented in a substantially downwards direction for unloading the cast fusion mix sample. In the unloading position the container 201 is positioned relative to the separator so that the solid sample material can fall freely from the container 201 into the inlet 102 of the separator unit 100. A temperature sensor (not shown) located in the container 201 may indicate when the fusion mix sample is sufficiently cooled. This information may automatically initiate the movement of the vessel 201 and discharge the cast fusion mix sample into separation unit 100.

### List of reference numbers

| | |
|---|---|
| Apparatus | 1 |
| Central Axis | 2 |
| Solid fusion mix sample | 3 |
| Slag material | 4 |
| Collector material | 5 |
| Separation unit | 100 |
| Separation chamber | 101 |
| Material Inlet | 102 |
| Impact | 103 |
| Outlet | 104 |
| Link piece | 105 |
| Rotating element | 106 |
| Impact head | 107 |
| Separation unit base | 108 |
| distal end of the impact heads | 109 |
| Inner surface | 110 |
| Top portion | 111 |
| Bottom portion | 112 |
| Lid | 115 |
| Air inlet | 116 |
| Collector material outlet door | 118 |
| Hinge | 119 |
| Casting unit | 200 |
| Container | 201 |
| Base | 202 |
| Moveable arm | 203 |
| Cavity | 205 |
| Container base | 207 |
| Outer wall | 220 |
| Inner wall | 221 |
| Side opening | 230 |
| Top opening | 240 |
| Rotatable pin | 245 |

## Claims

1. A process for separating a fusion mix sample comprising a slag material (4) and a collector material (5) using a separator (100) comprising a plurality of impact members (103) configured to rotate around a center axis (2) of the separator (100), the process comprising at least the steps of:
providing a solid fusion mix sample (3) and loading the solid sample into the separator (100);
dislodging slag material (4) from the solid fusion mix sample (3) by rotating the impact members (103) around the center axis (2), said center axis (2) being oriented at an angle between 15 to 85 degree with respect to vertical and contacting the rotating impact members (103) and the solid fusion mix sample (3) to provide a collector material (5) and a slag material (4);
separating by specific gravity using a gas flow and optionally centripetal forces on the loosened slag to provide a high-density fraction substantially comprising the collector material and a low-density fraction substantially comprising slag material.

2. The process according to claim 1, wherein the dislodging of the slag material (4) is achieved until the the high-density fraction comprises collector material (5) which has a purity of 99 w/w% or more, such as 99.9 w/w% or more.

3. The process according to any previous claims, additionally comprising the initial steps of:
providing a liquid fusion mix sample comprising collector material (5) and slag material (4);
separating, while in the liquid state, the collector material (5) from a portion of the slag material (4) by removing a portion of the upper layer of the liquid fusion mix sample;
cooling the remaining liquid fusion mix sample to provide the solid fusion mix sample (3).

4. The process according to claim 3, wherein the liquid fusion mix sample has a volume V₁ comprised of the volume of collector material V_{c} and the volume of slag material Vₛ, and wherein the step of separating is achieved by pouring the liquid fusion mix sample into a container having a top opening and a volume V₂, V₂ being larger than V_{c} but smaller than V₁.

5. An apparatus (1) for separating a solid fusion mix material (3) into a collector material (5) and a slag material (4), the apparatus (1) having a separating unit (100), the separating unit defining a central axis (2), and comprising
a separation chamber (101) having an inner surface (110) and having a top portion (111) and a bottom portion (112) arranged with respect to the central axis,
an inlet (102) configured to allow entry of a solid fusion mix material (3),
an impact member (103) configured to rotate around the central axis (2) by rotating means and adapted to contact a solid fusion mix material in the separation chamber while rotating, to dislodge slag material and thereby separate the solid fusion mix material (3) into a slag material (4) and a collector material (5); and
at least one outlet (104) allowing extraction of separated slag material and/or collector material from the separating chamber (101),
**characterized in that** the central axis (102) is oriented at an angle between 15 degrees to 85 degrees with respect to vertical.

6. The apparatus (1) according to claim 5 further comprising a casting unit (200) comprising:
- a container (201) for accommodating a liquid fusion mix material, the container (201) having a base (207) with a side wall extending from the base, the side wall defining a top opening (240) into the container;
- cooling means for solidifying a liquid fusion mix material in the container (201); and
- moving means adapted to move the container between at least a loading position and an unloading position.

7. The apparatus (1) according to claim 5 to claim 6, wherein the bottom portion of the separation chamber (101) has a tapered shape, preferably a conical shape or half spherical shape.

8. The apparatus (1) according to claim 5 to claim 7, wherein the impact member (103) comprising an impact head (107), a link piece (105), and a rotating element (106), said link piece (105) being attached to the impact head (107) in one end and to a rotating member in the other end, and wherein the link piece (105) is flexible and optionally wherein the link piece (105) is a string, chain, wire or cable.

9. The apparatus (1) according to claim 6 to claim 8, wherein the separating unit (100) comprising a first outlet for removing slag material and a second outlet for removing collector material.

10. The apparatus (1) according to claim 5 to claim 9, wherein the first outlet is located in the top portion (111) of the separation chamber (101).

11. The apparatus (1) according to claim 5 to claim 10, wherein the second outlet is located in the bottom portion (112) of the separation chamber (101).

12. The apparatus according (1) to claim 5 to claim 11, wherein the separating unit (100) comprising suction means configured to extract the particles and/or dusts of slag material from the separating chamber (101).

## Patentansprüche

1. Vorgang zum Abscheiden einer Schmelzmischungsprobe, umfassend ein Schlackematerial (4) und ein Sammlermaterial (5), mithilfe eines Abscheiders (100), umfassend eine Vielzahl von Aufprallelementen (103), die dazu konfiguriert sind, sich um eine Mittelachse (2) des Abscheiders (100) zu drehen, wobei der Vorgang mindestens die folgenden Schritte umfasst:
Bereitstellen einer festen Schmelzmischungsprobe (3) und Laden der festen Probe in den Abscheider (100);
Ablösen von Schlackematerial (4) von der festen Schmelzmischungsprobe (3) durch Drehen der Aufprallelemente (103) um die Mittelachse (2), wobei die Mittelachse (2) in einem Winkel zwischen 15 bis 85 Grad zu einer Vertikalen ausgerichtet ist und die rotierenden Aufprallelemente (103) und die feste Schmelzmischungsprobe (3) berührt, um ein Sammelmaterial (5) und ein Schlackematerial (4) bereitzustellen;
Abscheiden nach spezifischem Gewicht mithilfe eines Gasstroms und optional von Zentripetalkräften auf die gelöste Schlacke, um eine Fraktion hoher Dichte, die im Wesentlichen das Sammlermaterial umfasst, und eine Fraktion niedriger Dichte, die im Wesentlichen Schlackematerial umfasst, bereitzustellen.

2. Vorgang nach Anspruch 1, wobei das Ablösen des Schlackematerials (4) erreicht wird, bis die Fraktion hoher Dichte Sammlermaterial (5) umfasst, das eine Reinheit von 99 Gew.-% oder mehr, wie 99,9 Gew.-% oder mehr, aufweist.

3. Vorgang nach einem der vorhergehenden Ansprüche, der zusätzlich die folgenden anfänglichen Schritte umfasst:
Bereitstellen einer flüssigen Schmelzmischungsprobe, umfassend Sammlermaterial (5) und Schlackematerial (4);
Abscheiden des Sammlermaterials (5), während es in dem flüssigen Zustand ist, von einem Abschnitt des Schlackematerials (4) durch Entfernen eines Abschnitts der oberen Schicht der flüssigen Schmelzmischungsprobe;
Abkühlen der verbleibenden flüssigen Schmelzmischungsprobe, um die feste Schmelzmischungsprobe (3) bereitzustellen.

4. Vorgang nach Anspruch 3, wobei die flüssige Schmelzmischungsprobe ein Volumen V₁ aufweist, das das Volumen des Sammlermaterials V_{c} und das Volumen des Schlackematerials Vₛ umfasst, und wobei der Schritt des Abscheidens durch Eingießen der flüssigen Schmelzmischungsprobe in einen Behälter, der eine obere Öffnung und ein Volumen V₂ aufweist, erreicht wird, wobei V₂ größer als V_{c}, aber kleiner als V₁ ist.

5. Vorrichtung (1) zum Abscheiden eines festen Schmelzmischungsmaterials (3) in ein Sammlermaterial (5) und ein Schlackematerial (4), wobei die Vorrichtung (1) eine Abscheideeinheit (100) aufweist, wobei die Abscheideeinheit eine Mittelachse (2) definiert und Folgendes umfasst
eine Abscheidekammer (101), die eine innere Oberfläche (110) aufweist und einen oberen Abschnitt (111) und einen unteren Abschnitt (112) aufweist, die in Bezug auf die Mittelachse angeordnet sind,
einen Einlass (102), der dazu konfiguriert ist, einen Eintritt eines festen Schmelzmischungsmaterials (3) zu ermöglichen,
ein Aufprallelement (103), das dazu konfiguriert ist, sich durch ein Drehmittel um die Mittelachse (2) zu drehen, und angepasst ist, um ein festes Schmelzmischungsmaterial in der Abscheidekammer zu berühren, während es sich dreht, um Schlackematerial abzulösen und dadurch das feste Schmelzmischungsmaterial (3) in ein Schlackematerial (4) und ein Sammlermaterial (5) abzuscheiden; und
mindestens einen Auslass (104), der eine Entnahme von abgeschiedenem Schlackematerial und/oder Sammlermaterial aus der Abscheidekammer (101) ermöglicht,
**dadurch gekennzeichnet, dass** die Mittelachse (102) in einem Winkel zwischen 15 Grad bis 85 Grad zu der Vertikalen ausgerichtet ist.

6. Vorrichtung (1) nach Anspruch 5, ferner umfassend eine Gießeinheit (200), umfassend:
- einen Behälter (201) zum Aufnehmen eines flüssigen Schmelzmischungsmaterials, wobei der Behälter (201) eine Basis (207) mit einer sich von der Basis erstreckenden Seitenwand aufweist, wobei die Seitenwand eine obere Öffnung (240) in den Behälter definiert;
- ein Kühlmittel zum Verfestigen eines flüssigen Schmelzmischungsmaterials in dem Behälter (201); und
- ein Transportmittel, das angepasst ist, den Behälter zwischen mindestens einer Ladeposition und einer Entladeposition zu bewegen.

7. Vorrichtung (1) nach Anspruch 5 bis Anspruch 6, wobei der untere Abschnitt der Abscheidekammer (101) einen sich verjüngenden Verlauf, vorzugsweise einen konischen Verlauf oder halbkugelförmigen Verlauf, aufweist.

8. Vorrichtung (1) nach Anspruch 5 bis Anspruch 7, wobei das Aufprallelement (103) einen Aufprallkopf (107), ein Verbindungsstück (105) und ein Drehelement (106) umfasst, wobei das Verbindungsstück (105) an einem Ende an dem Aufprallkopf (107) und an dem anderen Ende an einem Drehelement befestigt ist und wobei das Verbindungsstück (105) flexibel ist und wobei das Verbindungsstück (105) optional eine Schnur, eine Kette, ein Draht oder ein Kabel ist.

9. Vorrichtung (1) nach Anspruch 6 bis Anspruch 8, wobei die Abscheideeinheit (100) einen ersten Auslass zum Entfernen von Schlackematerial und einen zweiten Auslass zum Entfernen von Sammlermaterial umfasst.

10. Vorrichtung (1) nach Anspruch 5 bis Anspruch 9, wobei sich der erste Auslass in dem oberen Abschnitt (111) der Abscheidekammer (101) befindet.

11. Vorrichtung (1) nach Anspruch 5 bis Anspruch 10, wobei sich der zweite Auslass in dem unteren Abschnitt (112) der Abscheidekammer (101) befindet.

12. Vorrichtung nach (1) Anspruch 5 bis Anspruch 11, wobei die Abscheideeinheit (100) ein Absaugmittel umfasst, das dazu konfiguriert ist, die Partikel und/oder Stäube des Schlackematerials aus der Abscheidekammer (101) zu entnehmen.

## Revendications

1. Processus permettant la séparation d'un échantillon de mélange de fusion comprenant un matériau de laitier (4) et un matériau collecteur (5) à l'aide d'un séparateur (100) comprenant une pluralité d'éléments d'impact (103) configurés pour tourner autour d'un axe central (2) du séparateur (100), le processus comprenant au moins les étapes de :
fourniture d'un échantillon de mélange de fusion solide (3) et chargement de l'échantillon solide dans le séparateur (100) ;
délogement du matériau de laitier (4) de l'échantillon de mélange de fusion solide (3) par rotation des éléments d'impact (103) autour de l'axe central (2), ledit axe central (2) étant orienté selon un angle compris entre 15 et 85 degrés par rapport à la verticale et en contact avec les éléments d'impact rotatifs (103) et l'échantillon de mélange de fusion solide (3) pour fournir un matériau collecteur (5) et un matériau de laitier (4) ;
séparation par densité à l'aide d'un flux de gaz et éventuellement de forces centripètes sur le laitier détaché pour fournir une fraction à haute densité comprenant sensiblement le matériau collecteur et une fraction à faible densité comprenant sensiblement le matériau de laitier.

2. Processus selon la revendication 1, dans lequel le délogement du matériau de laitier (4) est réalisé jusqu'à ce que la fraction à haute densité comprenne un matériau collecteur (5) ayant une pureté de 99 % p/p ou plus, par exemple 99,9 % p/p ou plus.

3. Processus selon l'une quelconque des revendications précédentes, comprenant également les étapes initiales de :
fourniture d'un échantillon de mélange de fusion liquide comprenant un matériau collecteur (5) et un matériau de laitier (4) ;
séparation, à l'état liquide, du matériau collecteur (5) d'une partie du matériau de laitier (4) en retirant une partie de la couche supérieure de l'échantillon de mélange de fusion liquide ;
refroidissement de l'échantillon de mélange de fusion liquide restant pour fournir l'échantillon de mélange de fusion solide (3).

4. Processus selon la revendication 3, dans lequel l'échantillon de mélange de fusion liquide a un volume V₁ composé du volume de matériau collecteur V_{c} et du volume de matériau de laitier Vₛ, et dans lequel l'étape de séparation est réalisée en versant l'échantillon de mélange de fusion liquide dans un récipient ayant une ouverture supérieure et un volume V₂, V₂ étant supérieur à V_{c} mais inférieur à V₁.

5. Appareil (1) permettant la séparation d'un matériau de mélange de fusion solide (3) en un matériau collecteur (5) et un matériau de laitier (4), l'appareil (1) ayant une unité de séparation (100), l'unité de séparation définissant un axe central (2), et comprenant
une chambre de séparation (101) ayant une surface intérieure (110) et ayant une partie supérieure (111) et une partie inférieure (112) agencées par rapport à l'axe central, une entrée (102) configurée pour permettre l'entrée d'un matériau de mélange de fusion solide (3),
un élément d'impact (103) configuré pour tourner autour de l'axe central (2) par un moyen de rotation et adapté pour entrer en contact avec un matériau de mélange de fusion solide dans la chambre de séparation pendant sa rotation, afin de déloger un matériau de laitier et de séparer ainsi le matériau de mélange de fusion solide (3) en un matériau de laitier (4) et un matériau collecteur (5) ; et
au moins une sortie (104) permettant l'extraction de matériau de laitier séparé et/ou de matériau collecteur de la chambre de séparation (101),
**caractérisé en ce que** l'axe central (102) est orienté selon un angle compris entre 15 degrés et 85 degrés par rapport à la verticale.

6. Appareil (1) selon la revendication 5 comprenant également une unité de coulée (200) comprenant :
- un récipient (201) destiné à recevoir un matériau de mélange de fusion liquide, le récipient (201) ayant une base (207) avec une paroi latérale se prolongeant depuis la base, la paroi latérale définissant une ouverture supérieure (240) dans le récipient ;
- un moyen de refroidissement pour solidifier un matériau de mélange de fusion liquide dans le récipient (201) ; et
- un moyen de déplacement adapté pour déplacer le récipient entre au moins une position de chargement et une position de déchargement.

7. Appareil (1) selon la revendication 5 et la revendication 6, dans lequel la partie inférieure de la chambre de séparation (101) a une forme conique, de préférence une forme conique ou une forme semi-sphérique.

8. Appareil (1) selon la revendication 5 à la revendication 7, dans lequel l'élément d'impact (103) comprend une tête d'impact (107), une pièce de liaison (105) et un élément rotatif (106), ladite pièce de liaison (105) étant fixée à la tête d'impact (107) à une extrémité et à un élément rotatif à l'autre extrémité, et dans lequel la pièce de liaison (105) est flexible et, éventuellement, dans lequel la pièce de liaison (105) est une corde, une chaîne, un fil ou un câble.

9. Appareil (1) selon la revendication 6 à la revendication 8, dans lequel l'unité de séparation (100) comprend une première sortie pour l'évacuation de matériau de laitier et une seconde sortie pour l'évacuation de matériau collecteur.

10. Appareil (1) selon la revendication 5 à la revendication 9, dans lequel la première sortie est située dans la partie supérieure (111) de la chambre de séparation (101).

11. Appareil (1) selon la revendication 5 à la revendication 10, dans lequel la seconde sortie est située dans la partie inférieure (112) de la chambre de séparation (101).

12. Appareil (1) selon la revendication 5 à la revendication 11, dans lequel l'unité de séparation (100) comprend un moyen d'aspiration configuré pour extraire les particules et/ou les poussières de matériau de laitier de la chambre de séparation (101).
